# EUROPEAN PATENT SPECIFICATION

(11) **EP 1 653 105 B1**
(45) Date of publication and mention of the grant of the patent: **31.03.2010**
(21) Application number: 05112668.8
(22) Date of filing: 07.05.2003
(51) Int. Cl.: F16D 21/06

(54) **A two-mass flywheel for a motor-vehicle**
Zweimassenschwungrad für Kraftfahrzeug
Volant à deux masses pour véhicule

(30) Priority: 08.05.2002 IT TO20020382
(43) Date of publication of application: 03.05.2006
(62) Divisional of application: 03010242.0
(73) Proprietor: C.R.F. Società Consortile per Azioni, 10043 Orbassano (TO) (IT)
(72) Inventor: Caenazzo, Dario, I-10043, Orbassano (Torino) (IT); Mesiti, Domenico, I-10043, Orbassano (Torino) (IT); Pregnolato, Gianluigi, I-10043, Orbassano (Torino) (IT); Uberti, Maurizio, I-10043, Orbassano (Torino) (IT)
(74) Representative: Rondano, Davide

(56) References cited:
- DE-A1- 10 034 730
- DE-A1- 10 134 118
- US-A- 3 185 274

## Description

The present invention relates to a two-mass flywheel for a motor-vehicle intended to be mounted between a crankshaft and a gearbox of the motor-vehicle, as specified in the preamble of Claim 1.

DE 100 34 730 A1, showing the features of the preamble of claim 1, discloses a two-mass flywheel of the above-defined type, in which a first engine-side mass and a second clutch-side mass are connected to one another through a torsional damper and in which the first mass comprises a first element and a second element releasably connected for rotation with one another by means of respective mating toothings provided on radially inner portions of these elements. The first element is secured to the crankshaft by means of screws, while the second element is connected to the second mass through the torsional damper. The flywheel disclosed in this document is associated to a clutch unit having two multi-disc wet clutches.

An object of the present invention is to provide a two-mass flywheel for a motor-vehicle which is able to filter out the torsional and axial oscillations of the crankshaft.

This object is achieved in full by a two-mass flywheel for a motor-vehicle having the characteristics defined in independent Claim 1.

Further advantageous characteristics of the invention are defined in the dependent claims.

The characteristics and the advantages of the invention will become clearer from the following detailed description given purely by way of non-limiting example with reference to the appended drawings, in which:
Figure 1 is a longitudinal section through a two-mass flywheel for a motor-vehicle double-clutch transmission according to a first preferred embodiment of the invention,
Figure 2 is a longitudinal section through a two-mass flywheel for a motor-vehicle double-clutch transmission according to a second preferred embodiment of the invention.

In the description and the claims which follow, terms such as "longitudinal" or "axial", as well as "radial" or "transverse" are intended to refer to the mounted condition on a motor-vehicle.

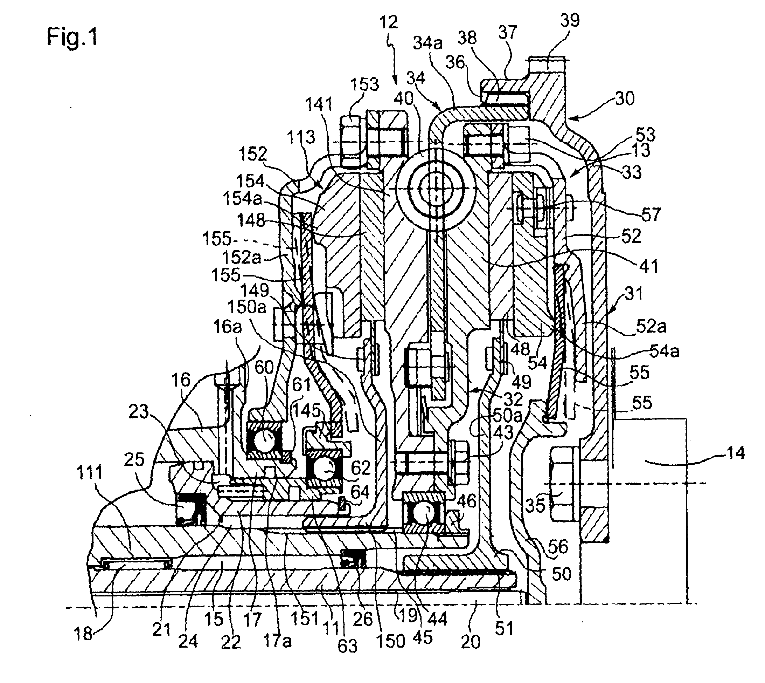

With reference to Figure 1, a motor-vehicle transmission, advantageously (but not necessarily) of the power-shift type, comprises:
- a gearbox, which is not shown since it is of known type (for example, from Italian patent application TO2001A000286) with two coaxial input shafts, that is, an inner input shaft 11 and an outer input shaft 111, respectively, and
- a clutch unit 12 with two normally-engaged single-plate dry clutches 13 and 113 for connecting a crankshaft 14 of the internal combustion engine, of which only the end portion facing towards the transmission is shown, for rotation with the gearbox input shafts 11 and 111, respectively.

The gearbox is enclosed by a support housing 16, shown partially in Figure 1 and having, at the end facing towards the clutch unit 12, a tubular extension 17 with a central axial hole 17a through which the two coaxial input shafts 11 and 111 extend. The outer shaft 111 has a tubular structure with a substantially cylindrical, central, coaxial cavity 15. The cavity 15 houses the inner shaft 11 which is supported for rotation by support elements of known type, including, for example, a needle bearing 18. The inner shaft 11 also has a tubular structure with a substantially cylindrical, central, coaxial cavity 19 in which a rod 20 for actuating the clutch 13 is slidable axially.

A sleeve 21 is interposed radially between the outer input shaft 111 and the cylindrical hole 17a formed in the extension 17 of the support housing 16. At the end facing towards the clutch unit 12, the sleeve 21 forms a cylindrical portion 22 which is coaxial with the two input shafts and which defines, with the cylindrical hole 17a, an outer annular space 23 and, with the shaft 111, an inner annular space 24.

Two oil-seal rings 25 and 26 are fitted between the sleeve 21 and the outer input shaft 111 and between the two input shafts 11 and 111, respectively, to prevent lubricating oil passing from the gearbox compartment, which operates in an oil bath, to the clutch unit 12 which, on the other hand, operates dry.

A two-mass flywheel, generally indicated 30 and comprising a first mass 31 and a second mass 32, is interposed axially between the clutch unit 12 and the crankshaft 14.

The first mass 31 of the flywheel 30 comprises a first element 33 and a second element 34 which are arranged side by side, the first facing towards the engine and the second towards the gearbox.

The first element 33 of the mass 31 is formed as a disc with an axial section that is variously shaped but extends substantially radially. A plurality of holes are formed in a radially inner position of the element 33 for the fixing of the element to the crankshaft 14 by means of screws 35 and, in a radially outer position, a tubular extension 37 provided with an internal ring gear 36 projects axially towards the second element 34. The element 33 also has, on its outer periphery, a ring gear 39 for meshing with a pinion of the electric starter (not shown) for starting the internal combustion engine of the vehicle.

The second element 34 of the mass 31 also is formed as a disc having a substantially L-shaped axial section with a cylindrical annular portion 34a which projects axially towards the first element 33. A ring gear 38 is formed on the outer periphery of the portion 34a and meshes permanently with the ring gear 36 of the first element 33 so as to connect the two elements 33 and 34 of the first mass 31 for rotation. The element 34 is also connected to the second mass 32 through a torsional damper 40, such as for example flexible-coupling springs.

The second mass 32 of the flywheel 30 also comprises a first disc-shaped element 41 and a second disc-shaped element 141, which are disposed on axially opposite sides of the second element 34 of the first mass 31 and are fixed together by means of screws 43. The mass 32 is supported for rotation by a radial ball bearing 44 mounted on the outer gearbox input shaft 111. The outer race of the bearing 44 is clamped axially between a pair of shoulders provided by the two disc-shaped elements 41 and 141 of the mass 32. The inner race of the bearing 44 is mounted in axial abutment on one side with a side of a splined portion 45 formed on the outer cylindrical surface of the shaft 111, and is clamped axially on the opposite side by means of a ring nut 46.

The first disc-shaped element 41 of the second mass 32 of the flywheel 30 is also arranged to act as an abutment member for the clutch 13 associated with the inner gearbox input shaft 11.

The clutch 13 is composed of a driven portion and of a driving portion which are fast for rotation with the input shaft 11 and with the crankshaft 14 (via the flywheel 30), respectively, and which can be coupled torsionally with each other to permit the transmission of torque between the shafts 11 and 14.

The driven portion of the clutch 13 comprises a plate 48 which is provided with rings made of friction material on both of its axial faces and which is fixed, by means of rivets 49, to a flange 50a of a hub 50 arranged so as to be slidable axially along a splined end portion 51 of the inner gearbox input shaft 11.

In addition to the above-described first disc-shaped element 41 as abutment member, the driving portion of the clutch 13 comprises a cover 52 fixed to the periphery of the first disc-shaped element 41 by means of screws 53 and having a substantially vertical wall 52a which extends radially inwards on the axially opposite side of the plate 48 to the first disc-shaped element 41. An axially movable clutch pressure plate 54 interposed between the plate 48 and the cover 52 is restrained for rotation with the latter by means of tangential tabs 57. The clutch pressure plate 54 is urged axially against the plate 48 by a disc spring 55 so that the plate 48 is kept clamped between the first disc-shaped element 41 as abutment member and the pressure plate 54 and can therefore transmit torque with these two components as a result of the friction between the axial abutment surfaces.

The disc spring 55 is clamped axially between its two radially outer and radially inner end portions, respectively, by the vertical wall 52a of the cover 52 and by a disc-shaped engagement element 56 which can be moved axially by the actuating rod 20. When the spring is not deformed, that is, when no command is imparted to the clutch 13 by means of the rod 20, a radially intermediate portion of the spring 55 exerts a leftward axial pressure (as observed in Figure 1) against a projection 54a of the clutch pressure plate 54, thus keeping the clutch 13 engaged.

In order to disengage the clutch 13 it is necessary to move the actuating rod 20 towards the right along the cavity 19 of the inner input shaft 11 so as to urge the radially inner portion of the spring 55 by means of the engagement element 56. The spring 55 pivots on the cover 52 and thus tends to rotate about its radially outer edge until it achieves the deformed configuration shown in broken line in Figure 1. In this condition, the clutch pressure plate 54, which is no longer subject to the axial pressure of the spring 55, moves away from the plate 48 by virtue of the action of the tangential tabs 57, thus interrupting the transmission of torque between the driving portion and the driven portion of the clutch.

The structure of the clutch 113 associated with the outer gearbox input shaft 111 will now be described, again with reference to Figure 1, in which the components and parts of the clutch 113 which correspond in structure and/or function to those of the clutch 13 are indicated by the same reference numerals but increased by 100.

The clutch 113 is composed of a driven portion and of a driving portion which are fast for rotation with the outer input shaft 111 and with the crankshaft 14 (via the flywheel 30), respectively, and which can be coupled torsionally with each other to permit the transmission of torque between the shafts 111 and 14.

The driven portion of the clutch 113 comprises a plate 148 which is provided with rings made of friction material on both of its axial faces and which is fixed by means of rivets 149 to a flange 150a of a hub 150 arranged so as to be slidable axially along a splined portion 151 of the outer gearbox input shaft 111.

The driving portion of the clutch 113 comprises, substantially:
- an abutment member provided by the second disc-shaped element 141 of the second mass 32 of the flywheel 30,
- a cover 152 fixed by screws 153 to the periphery of the second disc-shaped element 141 and having a substantially vertical wall 152a which extends radially inwards on the axially opposite side of the plate 148 to the second disc-shaped element 141, separating the clutch unit 12 from the gearbox, and
- an axially movable clutch pressure plate 154 interposed between the plate 148 and the cover 152 and restrained for rotation with the latter by means of tangential tabs (not visible in Figure 1).

The cover 152 is supported for rotation by a radial ball bearing 60 fitted on the tubular extension 17 of the gearbox housing 16. The outer race of the bearing 60 is free axially, whereas the inner race is clamped by a snap ring 61 against a shoulder formed in the housing 16.

In rest conditions, that is, when the driver of the vehicle is not imparting any commands to the clutch, the plate 148 is kept clamped between the second disc-shaped element 141 as abutment member and the clutch pressure plate 154 as a result of the axial pressure exerted by a disc spring 155 on the plate 154.

The disc spring 155 is restrained on the vertical wall 152a of the cover 152 and bears, with its two radially outer and radially inner end portions, respectively, against a projection 154a of the clutch pressure plate 154, and against an annular engagement element 145. The element 145 is supported for rotation by a radial ball bearing 62 mounted on an end of a plunger 63.

The plunger 63 is arranged so as to be slidable axially in the annular space 23 formed between the cylindrical portion 22 of the sleeve 21 and the tubular extension 17 of the gearbox support housing 16. The supply of oil under pressure to the annular space 23 from a duct formed in a vertical wall 16a of the gearbox housing 16 brings about rightward axial movement of the plunger 63 as far as a travel-limit position defined by a snap ring 64 fitted on the end of the sleeve 22 facing the engine. By means of the engagement element 145, the plunger 63 pulls along the radially inner end portion of the spring 155 which thus tends to pivot about its radially intermediate portion, which is restrained on the cover 152, until it achieves the deformed configuration shown in broken outline in Figure 1. In this condition, the clutch pressure plate 154, which is no longer subject to the axial pressure of the spring 155, moves away from the plate 148 by virtue of the action of the tangential tabs, thus interrupting the transmission of torque between the driving portion and the driven portion of the clutch 113.

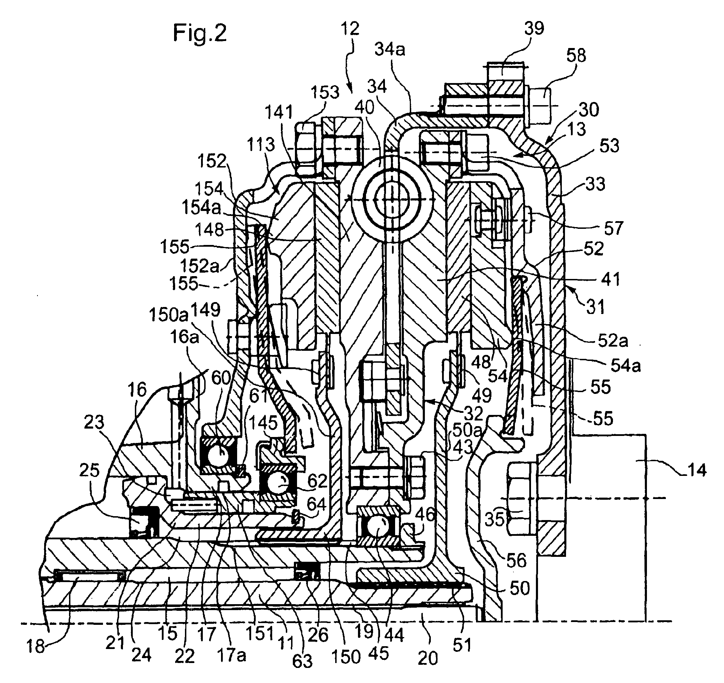

A second preferred embodiment of a motor-vehicle clutch and flywheel assembly according to the invention is shown in Figure 2, in which parts and elements identical or corresponding to those of Figure 1 have been given the same reference numerals.

As is clear from a comparison between Figures 1 and 2, this second embodiment is substantially identical to that described above, with the difference that the first and second elements 33 and 34 of the first mass 31 of the flywheel 30 are connected for rotation with one another by means of screws 58 instead of by meshing between respective ring gears 36 and 38.

Naturally, the principle of the invention remaining the same, the embodiments and manufacturing details may be varied widely with respect to those described and illustrated purely by way of non-limiting example.

## Claims

1. A motor-vehicle double-clutch transmission comprising a two-mass flywheel (30) intended to be mounted between a crankshaft (14) and a gear-box of the the mater vehicle and a clutch unit (12), the flywheel (30) comprising a first mass (31), a second mass (32) and torsional damping means (40) interposed between said first and second masses (31, 32), wherein the first mass (31) comprises a first element (33) and a second element (34) releasably connected (36, 38; 58) for rotation with one another, **characterized in that** the second mass (32) comprises first and second separate disc-shaped elements (41, 141) disposed on axially opposite sides with respect to the second element (34) of the first mass (31) and arranged to act each as an abutment member for a respective clutch (13, 113) of the clutch unit (12).

2. A transmission according to Claim 1, wherein the first mass (31) is arranged on the side of the flywheel (30) adapted to be connected to the crankshaft (14) of the motor-vehicle.

3. A transmission according to Claim 1 or Claim 2, wherein the torsional damping means (40) are arranged after the releasable connection (36, 38; 58) between the first and second elements (33, 34) of the first mass (31) of the flywheel (30), in the direction from the crankshaft (14) to the clutch unit (12).

4. A transmission according to any of the preceding claims, wherein the first and second elements (33, 34) of the first mass (31) of the flywheel (30) have respective ring gears (36, 38) meshing with one another.

5. A transmission according to Claim 4, wherein the ring gear (38) of the second element (34) of the first mass (31) is formed on the outer periphery of that second (34) element while the ring gear (36) of the first element (33) of the first mass (31) is provided in a tubular extension (37) of that first element (33) axially projecting towards the second element (34) in a radially outer position.

6. A transmission according to any of Claims 1 to 3, wherein the first and second elements (33, 34) of the first mass (31) of the flywheel (30) are connected for rotation with one another by means of screws (58).

## Patentansprüche

1. Kraftfahrzeug-Doppelkupplungsgetriebe, das ein Zweimassenschwungrad (30), das zwischen einer Kurbelwelle (14) und einem Getriebegehäuse des Kraftfahrzeugs montiert werden soll, und eine Kupplungseinheit (12) umfasst, wobei das Schwungrad (30) eine erste Masse (31), eine zweite Masse (32) und eine Torsionsdämpfungseinrichtung (40) umfasst, die zwischen der ersten und der zweiten Masse (31, 32) angeordnet ist, und die erste Masse (31) ein erstes Element (33) sowie ein zweites Element (34) umfasst, die zur Drehung miteinander lösbar verbunden sind (36, 38; 58), **dadurch gekennzeichnet, dass** die zweite Masse (32) ein erstes und ein zweites separates scheibenförmiges Element (41, 141) umfasst, die in Bezug auf das zweite Element (34) der ersten Masse (31) an axial einander gegenüberliegenden Seiten angeordnet und so eingerichtet sind, dass sie jeweils als ein Anschlagselement für eine entsprechende Kupplung (13, 113) der Kupplungseinheit (12) wirken.

2. Getriebe nach Anspruch 1, wobei die erste Masse (31) an der Seite des Schwungrades (30) angeordnet ist, die so eingerichtet ist, dass sie mit der Kurbelwelle (14) des Kraftfahrzeugs verbunden ist.

3. Getriebe nach Anspruch 1 oder Anspruch 2, wobei die Torsionsdämpfungseinrichtung (40) nach der lösbaren Verbindung (36, 38; 58) zwischen dem ersten und dem zweiten Element (33, 34) der ersten Masse (31) des Schwungrades (30) in der Richtung von der Kurbelwelle (14) zu der Kuppliangseinheit (12) angeordnet ist.

4. Getriebe nach einem der vorangehenden Ansprüche, wobei das erste und das zweite Element (33, 34) der ersten Masse (31) des Schwungrades (30) entsprechende Zahnkränze (36, 38) haben, die miteinander in Eingriff sind.

5. Getriebe nach Anspruch 4, wobei der Zahnkranz (38) des zweiten Elementes (34) der ersten Masse (31) an dem Außenumfang des zweiten Elementes (34) ausgebildet ist, während der Zahnkranz (36) des ersten Elementes (33) der ersten Masse (31) in einer röhrenförmigen Verlängerung (34) des ersten Elementes (33) vorhanden ist, die an einer radial außenliegenden Position axial auf das zweite Element (34) zu vorsteht.

6. Getriebe nach einem der Ansprüche 1 bis 3, wobei das erste und das zweite Element (33, 34) der ersten Masse (31) des Schwungrades (30) mittels Schrauben (58) zur Drehung miteinander verbunden sind.

## Revendications

1. Transmission à double embrayage de véhicule à moteur comportant un volant d'inertie à deux masses (30) prévu pour être monté entre un vilebrequin (14) et une boîte de vitesses du véhicule à moteur et une unité d'embrayage (12), le volant d'inertie (30) comportant une première masse (31), une deuxième masse (32) et des moyens d'amortissement de torsion (40) interposés entre lesdites première et deuxième masses (31, 32), la première masse (31) comporte un premier élément (33) et un deuxième élément (34) reliés de manière libérable (36, 38, 58) pour rotation l'un avec l'autre, **caractérisée en ce que** la deuxième masse (32) comporte des premier et deuxième éléments en forme de disque séparés (41, 141) disposés sur des côtés axialement opposés par rapport au deuxième élément (34) de la première masse (31) et prévus pour agir chacun comme un élément de butée pour un embrayage respectif (13, 113) de l'unité d'embrayage (12).

2. Transmission selon la revendication 1, dans laquelle la première masse (31) est disposée sur le côté du volant d'inertie (30) prévu pour être relié au vilebrequin (14) du véhicule à moteur.

3. Transmission selon la revendication 1 ou la revendication 2, dans laquelle les moyens d'amortissement de torsion (40) sont disposés après le raccordement libérable (36, 38, 58) entre les premier et deuxième éléments (33, 34) de la première masse (31) du volant d'inertie (30), dans la direction depuis le vilebrequin (14) jusqu'à l'unité d'embrayage (12).

4. Transmission selon l'une quelconque des revendications précédentes, dans laquelle les premier et deuxième éléments (33, 34) de la première masse (31) du volant d'inertie (30) ont des couronnes dentées respectives (36, 38) en prise l'une avec l'autre.

5. Transmission selon la revendication 4, dans laquelle la couronne dentée (38) du deuxième élément (34) de la première masse (31) est formée sur la périphérie extérieure de ce deuxième élément (34) alors que la couronne dentée (36) du premier élément (33) de la première masse (31) est prévue dans une extension tubulaire (37) de ce premier élément (33) dépassant axialement vers le deuxième élément (34) dans une position radialement extérieure.

6. Transmission selon l'une quelconque des revendications 1 à 3, dans laquelle les premier et deuxième éléments (33, 34) de la première masse (31) du volant d'inertie (30) sont reliés pour rotation l'un avec l'autre au moyen de vis (58).
